(19) Europäisches Patentamt
European Patent Office
Office européen des brevets

(11) **EP 1 112 976 B1**

(12) **FASCICULE DE BREVET EUROPEEN**

(45) Date de publication et mention
de la délivrance du brevet:
**11.07.2007 Bulletin 2007/28**

(51) Int Cl.:
***C03B 37/027*** *(2006.01)*   ***C03B 37/023*** *(2006.01)*
***B29D 11/00*** *(2006.01)*

(21) Numéro de dépôt: **00403389.0**

(22) Date de dépôt: **04.12.2000**

(54) **Procédé de refroidissement d'une fibre optique en cours de fibrage**

Verfahren zum Kühlen einer optischen Faser während des Ziehens

Process for cooling an optical fibre during drawing

(84) Etats contractants désignés:
**AT BE CH CY DE DK ES FI FR GB GR IE IT LI LU MC NL PT SE TR**

(30) Priorité: **30.12.1999 FR 9916723**

(43) Date de publication de la demande:
**04.07.2001 Bulletin 2001/27**

(73) Titulaire: **Draka Comteq B.V.**
**1083 HJ Amsterdam (NL)**

(72) Inventeurs:
• **Dubois, Sophie**
**78100 Saint Germain en Laye (FR)**
• **Orcel, Gérard**
**78600 Maisons Laffitte (FR)**
• **Bourhis, Jean-François**
**95150 Taverny (FR)**

(74) Mandataire: **Blokland, Arie**
**Algemeen Octrooi- en Merkenbureau,**
**P.O. Box 645**
**5600 AP Eindhoven (NL)**

(56) Documents cités:
**EP-A- 0 887 319      US-A- 5 928 574**

• **PATENT ABSTRACTS OF JAPAN vol. 18, no. 288, 2 juin 1994 (1994-06-02) & JP 06 056456 A (FUJIKURA LTD.), 1 mars 1994 (1994-03-01)**
• **DATABASE WPI Section Ch, Week 32 Derwent Publications Ltd., London, GB; Class F01, AN 97-347231 XP002144228 & JP 09 142890 A (SAMSUNG ELECTRONICS CO. LTD.), 3 juin 1997 (1997-06-03)**
• **PATENT ABSTRACTS OF JAPAN vol. 1998, no. 8, 30 juin 1998 (1998-06-30) & JP 10 067531 A (FURUKAWA ELECTRIC CO. LTD.), 10 mars 1998 (1998-03-10)**
• **PATENT ABSTRACTS OF JAPAN vol. 1998, no. 14, 31 décembre 1998 (1998-12-31) & JP 10 259036 A (SUMITOMO ELECTRIC IND. LTD.), 29 septembre 1998 (1998-09-29)**
• **PATENT ABSTRACTS OF JAPAN vol. 1997, no. 7, 31 juillet 1997 (1997-07-31) & JP 09 077527 A (FURUKAWA ELECTRIC CO. LTD.), 25 mars 1997 (1997-03-25)**
• **PATENT ABSTRACTS OF JAPAN vol. 7, no. 77, 30 mars 1983 (1983-03-30) & JP 58 009836 A (SHOWA DENSEN ELECTRIC WIRE CO. LTD.), 20 janvier 1983 (1983-01-20)**

# Description

La présente invention concerne un procédé de refroidissement d'une fibre optique en cours de fibrage, par mise en contact avec au moins un fluide refroidisseur dans au moins une zone de refroidissement.

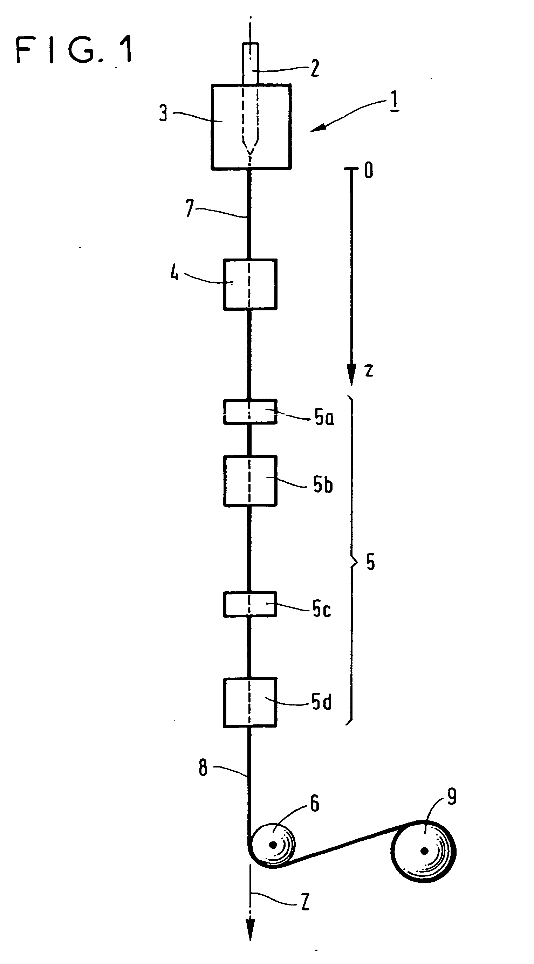

Il existe diverses catégories de fibres optiques : les fibres optiques à base de verre d'oxyde, les fibres optiques à base de verre de fluorure et les fibres optiques plastiques à base de matériau polymère. La fibre optique à base de verre d'oxyde, généralement en verre de silice, est fabriquée par étirage à chaud, ou fibrage, à partir d'une préforme qui est un gros cylindre de verre de silice, éventuellement au moins partiellement dopée, de diamètre généralement compris entre 20 et 200 mm et de longueur généralement comprise entre 300 et 2000 mm. La figure 1 représente une vue schématique d'une tour 1 de fibrage. Une préforme 2 est fondue dans un four 3 de fibrage qui porte la température de la préforme à environ 2000 °C. Une fibre 7 ainsi obtenue est refroidie à l'air ambiant puis dans au moins un dispositif 4 de refroidissement, et enfin de nouveau à l'air ambiant avant d'être introduite dans un dispositif 5 de revêtement. La position du dispositif 4 de refroidissement sur la tour 1 de fibrage est généralement optimisée pour obtenir la bonne température de fibre au niveau de l'enduction de résine. Le dispositif 5 de revêtement réalise le revêtement de la fibre 7 par au moins une résine de revêtement le plus souvent réticulable aux ultraviolets. Le dispositif 5 comprend généralement au moins un dispositif (5a, 5c) d'injection suivi d'au moins un dispositif (5b, 5d) de réticulation. Dans le cas représenté sur la figure 1, le dispositif 5 comprend un dispositif 5a d'injection primaire de résine, suivi d'un dispositif 5b de réticulation de ladite résine par ultraviolet, puis un dispositif 5c d'injection secondaire de résine, suivi d'un dispositif 5d de réticulation de ladite résine par ultraviolet. Enfin une fibre optique 8 revêtue est tirée par un cabestan 6 puis enroulée sur une bobine 9 d'enroulement.

Les dispositifs présents au-dessous du four 3 de fibrage, situés selon un même axe vertical descendant Z, sont généralement repérés par leur position par rapport au bas du four 3 de fibrage, comme l'indique la cote z. Tous les éléments du dispositif illustré par la figure 1 sont bien connus de l'homme du métier. D'autres, qui ne sont pas représentés, sont également bien connus de l'homme du métier. C'est ainsi que par exemple des moyens de mesure du diamètre de la fibre non revêtue et/ou revêtue, des moyens de mesure de l'excentrement de la fibre dans le revêtement primaire et/ou secondaire et des moyens de mesure de la température de la fibre à une cote donnée appartiennent à la technique connue.

Le refroidissement doit permettre de porter la température de la fibre en sortie de four de fibrage à une température compatible avec l'application de résine de revêtement, c'est-à-dire de l'ordre de 50°C. En effet, la température de la fibre en sortie de four de fibrage est élevée, généralement de l'ordre de 1000 à 2000°C pour une fibre à base de silice selon le four de fibrage et la vitesse d'étirage utilisés. Le refroidissement de la fibre entre la sortie du four de fibrage et l'entrée du dispositif de revêtement est un des problèmes majeurs à résoudre au fibrage, et ce d'autant plus que l'on veut augmenter la vitesse de fibrage. En effet, il est connu que l'atténuation de la fibre dépend des conditions de refroidissement et de plus, si la température de la fibre à l'entrée du dispositif de revêtement est trop élevée, cela peut entraîner des problèmes, tant d'excentrement de la fibre dans son revêtement que de qualité dudit revêtement. Or la vitesse de fibrage des fibres à base de silice en production industrielle, qui était encore de 300 m/mn il y a quelques années, augmente de plus en plus pour atteindre aujourd'hui des valeurs de l'ordre de 1500 m/mn ou plus. Cette tendance se confirme de nos jours, liée à l'augmentation de la productivité qui est l'un des objectifs majeurs de l'industrie des fibres optiques.

Dans le cas d'une fabrication de fibres optiques à base de verre de fluorure, le principe du procédé est le même, mais la préforme est généralement de plus petite taille, généralement de 15 à 20 mm de diamètre pour une longueur maximum de quelques unités à quelques dizaines de cm, par exemple de 10 cm, et la température de sortie de four de fibrage est généralement comprise entre 300 et 450°C. Dans ce cas, il peut se poser le même problème technique. De la même façon dans le cas d'une fabrication de fibres optiques à base de matériau polymère, où la préforme est généralement de plus petite taille, généralement de quelques dizaines de mm de diamètre, par exemple de 80 mm de diamètre, pour une longueur maximum de quelques dizaines de cm, par exemple de 50 cm, et la température de sortie de four de fibrage est généralement comprise entre 200 et 250°C, il peut se poser le même problème technique. Dans la suite de la description, on raisonne en terme de fibres optiques à base de silice, un raisonnement identique s'appliquant pour les autres types de fibres optiques, dont les fibres optiques à base de verre différent de la silice.

Pour refroidir la fibre à base de silice, divers dispositifs ont été mis en oeuvre. Une solution possible est d'augmenter la surface d'échange entre la fibre à refroidir et l'air ambiant, notamment par l'augmentation de la distance entre le four de fibrage et le dispositif de revêtement. Mais une telle solution impliquerait d'augmenter la hauteur des tours de fibrage actuellement utilisées, ce qui serait beaucoup trop coûteux principalement en terme d'investissement.

Une autre solution est d'augmenter l'efficacité du refroidissement sur la distance existant entre le four de fibrage et le dispositif de revêtement. En dehors du simple refroidissement à l'air ambiant qui s'avère très insuffisant pour les tours de fibrage actuellement utilisées, le principe commun des divers dispositifs utilisés en industrie, illustrés par exemple par la demande de brevet européen EP-A1-0.079.186, consiste en l'injection d'un gaz radialement vers la surface de la fibre à une cote donnée de la sortie du four de fibrage et la circulation dudit gaz, ascendante ou descendante, sur une certaine longueur de la fibre au coeur d'un tube d'échange. La conductivité thermique dudit gaz, connu par l'homme du métier comme étant généralement de l'air, du dioxyde de carbone, de l'azote, de l'argon ou de l'hélium, de façon préférée de l'hélium éventuellement mélangé à de l'azote, est source d'un transfert thermique. De préférence, le tube est refroidi en périphérie à l'aide d'un fluide refroidisseur qui est généralement de l'eau. Par exemple le brevet US-A-4.761.168 décrit un perfectionnement de tels systèmes, en ce que l'on fait circuler du gaz le long de la fibre dans un tube d'échange de forme particulière, qui assure le remplacement régulier de la couche limite de gaz circulant le long de la fibre. Un tel perfectionnement vise à améliorer l'efficacité de l'échange thermique.

D'autre part, un des principaux problèmes que pose l'utilisation ultérieure de la fibre optique ainsi refroidie est que le refroidissement imposé à la fibre lors de sa fabrication, en sortie de four de fibrage et avant le passage en dispositif de revêtement, peut faire remonter de manière sensible le niveau de la diffusion Rayleigh associée à la fibre, et donc augmenter la plus grande partie de l'atténuation que présente la fibre optique prête à être utilisée. Or on sait que l'atténuation de la fibre optique aux longueurs d'ondes utilisées, que celles-ci soient proches de 1310 nm ou de 1550 nm, doit être la plus faible possible pour transmettre au mieux le signal lumineux dans ladite fibre.

C'est pourquoi diverses solutions ont été proposées pour définir des profils de refroidissement, obtenus par des procédés et/ou dispositifs particuliers, qui minimisent la diffusion Rayleigh de la fibre. En général il est proposé de recourir au moins partiellement à des profils de refroidissement lents, c'est-à-dire plus lents qu'à l'air ambiant. Par exemple la demande de brevet DE-A1-37.13.029 indique la réalisation d'un refroidissement lent en sortie de four de fibrage.

Mais de tels procédés ne sont pas satisfaisants, en ce qu'ils ne permettent pas d'obtenir une baisse optimale de l'atténuation suffisante par rapport à l'atténuation théorique minimale, sans dégrader la tenue mécanique de la fibre.

La présente invention a pour but de pallier les inconvénients de procédes de refroidissement de l'art antérieur, en permettant un refroidissement amélioré d'une fibre optique en cours de fibrage. Elle a notamment pour but, par rapport aux procédes de refroidissement connus de l'art antérieur, de conserver voire de diminuer sensiblement la diffusion Rayleigh, et donc l'atténuation, de la fibre fabriquée par un procédé de fibrage utilisant le procédé de refroidissement selon l'invention et de préserver la tenue mécanique de la fibre.

A cet effet, l'invention concerne un procédé de refroidissement d'une fibre optique en cours de fibrage, par mise en contact avec au moins un fluide refroidisseur dans au moins une zone de refroidissement, **caractérisé en ce que** l'on procède dans une zone de refroidissement rapide à un refroidissement rapide, c'est-à-dire un refroidissement moins lent qu'un refroidissement à l'air ambiant, pour passer d'une température initiale de la fibre comprise entre 2000°C et 1500°C pour des fibres à base de verre de silice, entre 450°C et 250°C pour des fibres à base de verre de fluorure et entre 250°C et 175°C dans le cas de fibre à base de matériau polymère, à une température de fin de refroidissement rapide de ladite fibre comprise entre 1700°C et 1200°C pour des fibres à base de verre de silice, entre 400°C et 200°C pour des fibres à base de verre de fluorure et entre 225°C et 75°C dans le cas de fibre à base de matériau polymère, suivi, dans une zone de refroidissement lent, d'un refroidissement lent, c'est-à-dire un refroidissement plus lent qu'un refroidissement à l'air ambiant pour passer d'une température de début de refroidissement lent de ladite fibre comprise entre 1700°C et 1000°C pour des fibres à base de verre de silice, entre 400°C et 150°C pour des fibres à base de verre de fluorure et entre 225°C et 50°C dans le cas de fibre à base de matériau polymère, à une température de fin de refroidissement lent de ladite fibre comprise entre 1500°C et 700°C pour des fibres à base de verre de silice, entre 350°C et 25°C pour des fibres à base de verre de fluorure et entre 200°C et 25°C dans le cas de fibre à base de matériau polymère, et la température initiale est supérieure à la température de fin de refroidissement (10) rapide et la température de début de refroidissement (11) lent est supérieur à la température de fin de refroidissement (11) lent et la température de fin de refroidissement (10) rapide est égale où supérieur à la température de début de refroisissement (11) lent.

Une zone de transition à l'air ambiant peut exister entre la zone de refroidissement rapide et la zone de refroidissement lent sans que cela soit obligatoire.

Le refroidissement rapide de la zone de refroidissement rapide est au moins aussi rapide, de préférence strictement plus rapide, qu'un refroidissement à l'air ambiant. En d'autres termes, la pente instantanée du refroidissement rapide, dT/dt, où T est la température de la fibre et t le temps, a une valeur plus élevée pour un tel refroidissement que ladite pente instantanée pour un refroidissement de la fibre laissée à l'air ambiant. Ladite pente instantanée a une valeur plus élevée pour un tel refroidissement que ladite pente instantanée pour un refroidissement de la fibre laissée à l'air ambiant, de préférence en moyenne dans la zone de refroidissement rapide, de façon plus préférée dans la majeure partie de la zone de refroidissement rapide et de façon encore plus préférée dans la quasi-totalité de la zone de refroidissement rapide.

Le refroidissement lent de la zone de refroidissement lent est au moins aussi lent, de préférence strictement plus lent, qu'un refroidissement à l'air ambiant. En d'autres termes, la pente instantanée du refroidissement lent, dT/dt, où T est la température de la fibre et t le temps, a une valeur plus faible pour un tel refroidissement que ladite pente instantanée pour un refroidissement de la fibre laissée à l'air ambiant. Ladite pente instantanée a une valeur plus faible pour un tel refroidissement que ladite pente instantanée pour un refroidissement de la fibre laissée à l'air ambiant, de préférence en moyenne dans la zone de refroidissement lent, de façon plus préférée dans la majeure partie de la zone de refroidissement lent et de façon encore plus préférée dans la quasi-totalité de la zone de refroidissement lent.

Selon un mode de réalisation préféré de l'invention, le profil de température de chaque zone de refroidissement est établi de façon à ce que la température fictive de la gaine ($T_{fg}$) soit la plus élevée possible et la température fictive du coeur ($T_{fc}$) soit la plus faible possible.

Avantageusement, un tel mode de réalisation permet de préserver lors du refroidissement l'atténuation de la fibre tout en améliorant la résistance mécanique de la fibre fabriquée par un fibrage utilisant le procédé de refroidissement selon l'invention. La résistance mécanique est définie par une norme Bellcore CR 20 édition 2/1998 portant sur la rupture de 50% des fibres optiques revêtues soumises à un allongement longitudinal, dans une répartition statistique des fibres ainsi testées, en utilisant la loi statistique de Weibull.

Les termes de gaine et de coeur sont connus de l'homme du métier. Le coeur correspond à la partie où au moins environ 50% de l'énergie lumineuse se propage, c'est-à-dire à la partie centrale de la fibre optique. Classiquement, on appelle gaine la partie qui s'étend jusqu'à un diamètre de 125 $\mu$m, c'est-à-dire la partie périphérique de la fibre optique complémentaire du coeur. Ce qui nous intéresse ici est la partie de la gaine à la périphérie de celle-ci, possédant une influence sur les propriétés mécaniques et en particulier la résistance mécanique de la fibre optique. On parle de température fictive de gaine. Par exemple dans le cas d'une fibre optique réalisée à partir d'une préforme primaire réalisée par un procédé de type MCVD (acronyme de "Modified Chemical Vapor Deposition"), rechargée en dépôt plasma, on raisonne en température fictive de recharge.

La température fictive est une notion introduite récemment dans le domaine des verres, pour mieux comprendre le comportement de ceux-ci. La température fictive met en valeur l'histoire thermique d'une composition de silice éventuellement dopée donnée, pour une propriété p donnée. Cette notion peut être appliquée aux fibres optiques, en particulier au cours du fibrage. A l'heure actuelle, on la mesure indirectement sur matériau par analyse en infrarouge ou Raman. Dans la présente demande, nous parlons de température fictive associée à la diffusion Rayleigh.

Pendant le fibrage, pour ladite composition, la température fictive diminue continûment en fonction du profil de refroidissement qui lui est imposé, pour une composition donnée, et elle prend une valeur constante quand la température de ladite silice est très inférieure à sa température de transition vitreuse..

La température fictive a fait l'objet de nombreuses études. Nous nous référons ici à l'étude de G.W. Scherer, "Relaxation in Glass and Composites", Krieger Publishing, 1992, en liaison avec les études de C. T. Moynihan, "Phenomenology of the Structural Relaxation Process and the Glass Transition", Assignment of Glass Transition, ATM STP 1249, ed. American Society for testing and materials, 1994, pp. 32-49, et de O.S. Narayanaswamy, Journal of the American Ceramics Society, 1971, 54(10), pp. 491-498. A partir de ces études, une programmation a permis de simuler des calculs de température fictive, à partir des caractéristiques de relaxation du verre à composition donnée. Lesdites simulations ont été corrélées avec des résultats expérimentaux, à base de mesures d'atténuation et de résistance mécanique de fibre réchauffées et trempées selon des conditions de refroidissement variables.

Du fait que le coeur est la principale partie guidante de la fibre optique, l'atténuation de la fibre optique obtenue par un procédé de fibrage au cours duquel a été réalisé le procédé de refroidissement selon l'invention est naturellement liée à la température fictive du coeur de la fibre. Du fait des effets de surface à la surface de la fibre optique, la résistance mécanique de la fibre optique obtenue par un procédé de fibrage au cours duquel a été réalisé le procédé de refroidissement selon l'invention est naturellement liée à la température fictive de la gaine de la fibre. La mise en oeuvre du procédé selon l'invention résulte donc d'un compromis à trouver entre l'optimisation de la température fictive du coeur de la fibre et l'optimisation de la température fictive de la gaine de la fibre.

Le procédé selon l'invention permet ainsi avantageusement de pouvoir pratiquement contrôler deux paramètres importants de la fibre optique obtenue par un procédé de fibrage au cours duquel il a été procédé au dit dispositif de refroidissement, à savoir l'atténuation et la résistance mécanique. Il a en effet été constaté que le profil du refroidissement rapide tel que réalisé selon l'invention n'influe pratiquement pas sur l'atténuation de ladite fibre optique.

Un autre des avantages du procédé selon l'invention est d'être adapté aux impératifs économiques, qui limitent la hauteur de la tour disponible pour le refroidissement, et qui font recourir à des vitesses de fibrage élevées. En effet la présence d'une zone de refroidissement rapide permet de gagner en hauteur de tour de fibrage et/ou en vitesse de fibrage, et d'augmenter la zone de refroidissement lent, c'est-à-dire d'améliorer l'atténuation. D'autre part, une telle zone permet avantageusement de contrôler la température d'entrée de la fibre dans la zone de refroidissement lent, quelle que soit la vitesse de fibrage.

Selon un mode de réalisation, le profil de refroidissement lent étant choisi de façon à ce que la température fictive du coeur soit la plus faible possible, on ajuste alors le profil de refroidissement rapide de façon que la température fictive de la gaine soit la plus élevée possible. Ainsi il est possible de disposer d'un moyen de mise en oeuvre du profil de refroidissement lent donné, de positionner celui-ci sur la tour de fibrage sur laquelle on réalise le fibrage de façon à minimiser la température fictive du coeur, puis de définir le moyen de mise en oeuvre du profil de refroidissement rapide et de positionner celui-ci sur ladite tour de fibrage de façon à maximiser la température fictive de la gaine. Si l'on préfère maîtriser en premier l'atténuation, et en fonction de cette maîtrise mettre en oeuvre une valeur maximale de la résistance mécanique, c'est ainsi que l'on agira. Ce sera le plus souvent le cas.

Selon un autre mode de réalisation, le profil de refroidissement rapide étant choisi de façon à ce que la température fictive de la gaine soit la plus élevée possible, on ajuste alors le profil de refroidissement lent de façon que la température fictive du coeur soit la plus faible possible. Ainsi il est possible de disposer d'un moyen de mise en oeuvre du profil de refroidissement rapide donné, de positionner celui-ci sur la tour de fibrage sur laquelle on réalise le fibrage de façon à maximiser la température fictive de la gaine, puis de définir le moyen de mise en oeuvre du profil de refroidissement lent et de positionner celui-ci sur ladite tour de fibrage de façon à minimiser la température fictive du coeur. Si l'on préfère maîtriser en premier la résistance mécanique, et en fonction de cette maîtrise mettre en oeuvre une valeur minimale de l'atténuation, c'est ainsi que l'on agira.

Généralement, la température initiale de la fibre à l'entrée de la zone de refroidissement rapide est environ égale à la température de la fibre à la sortie du four de fibrage. La température de la fibre à la sortie de la zone de refroidissement rapide, ainsi qu'il a été expliqué précédemment, dépend de la composition de la gaine, et est établie à partir de la température fictive de gaine que l'on souhaite obtenir.

Généralement, la température initiale de la fibre à l'entrée de la zone de refroidissement lent et la température de la fibre à la sortie de la zone de refroidissement lent, ainsi qu'il a été expliqué précédemment, dépendent toutes deux de la composition du coeur, et sont établies à partir de la température fictive du coeur que l'on souhaite obtenir.

Dans un mode de réalisation, le procédé selon l'invention est tel que l'on procède à un refroidissement rapide supplémentaire dans une seconde zone de refroidissement rapide, à la suite dudit refroidissement lent.

Avantageusement, un tel refroidissement rapide supplémentaire permet d'amener la température de la fibre à la température d'entrée dans la zone d'enduction sans pour autant dégrader les propriétés mécaniques et optiques de la fibre.

La présente invention, bien qu'illustrée pour les fibres en verre de silice, s'applique également aux autres catégories de fibres décrites précédemment, les plages de température étant adaptées en conséquence, ainsi qu'il est connu de l'homme du métier.

Le fluide refroidisseur est choisi par exemple dans le groupe formé par l'air, l'argon, l'azote, le dioxyde de carbone et l'hélium. De manière préférée ledit fluide refroidisseur est de l'hélium éventuellement mélangé à de l'azote.

L'invention concerne enfin un dispositif de mise en oeuvre du procédé selon l'invention, comprenant au moins un dispositif de refroidissement rapide donné et un dispositif de refroidissement lent donné.

L'invention sera mieux comprise et d'autres caractéristiques et avantages apparaîtront à la lecture de la description qui va suivre, donnée à titre non limitatif, par référence aux figures 1 à 5.

La figure 1 représente une vue schématique d'un dispositif de fibrage incorporant un dispositif de refroidissement de fibre optique selon l'art antérieur.

La figure 2 représente une vue schématique d'un dispositif de fibrage incorporant un dispositif de refroidissement de fibre optique.

La figure 3 représente quelques courbes de refroidissement au sein d'un dispositif de fibrage selon l'art antérieur.

La figure 4 représente la température fictive du coeur de la fibre 7, en ordonnée et en °C, en fonction de la température d'entrée, en abscisse'et en °C, dans le dispositif 11 de refroidissement lent, au sein du même dispositif de fibrage que celui de la figure 2.

La figure 5 représente la courbe de refroidissement finalement imposée à la fibre selon le procédé de l'invention.

La figure 1 a été précédemment décrite en relation avec l'art antérieur. La tour 1 de fibrage comporte un four 3 de fibrage, un dispositif 4 de refroidissement selon l'art antérieur, un dispositif 5 de revêtement, un cabestan 6 et une bobine 9 d'enroulement.

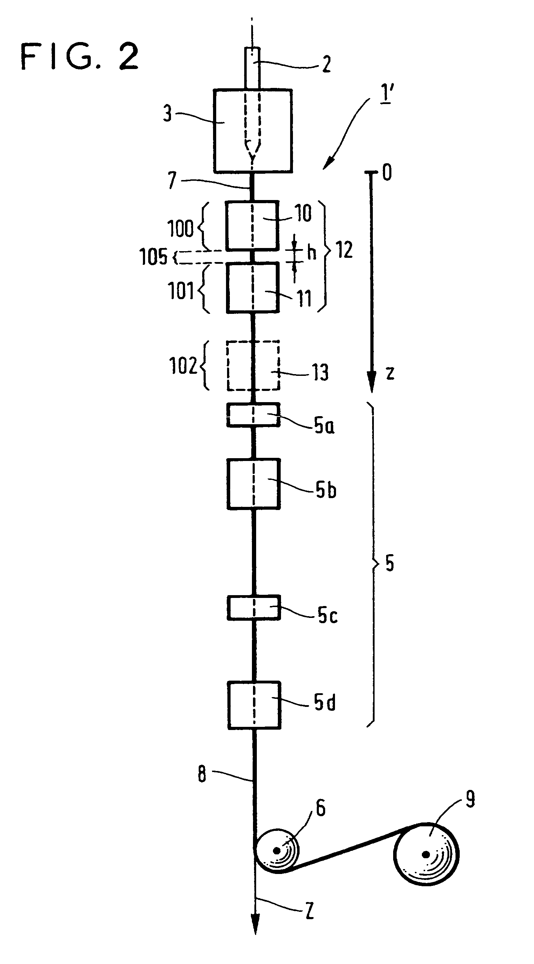

La figure 2 représente une tour l' de fibrage, qui reprend tous les éléments de la figure 1, à l'exception du dispositif 12 de refroidissement qui est selon le procédé de l'invention. Ledit dispositif 12 de refroidissement comprend un premier dispositif 10 de refroidissement rapide, qui définit une zone 100 de refroidissement rapide, et un second dispositif 11 de refroidissement lent, qui définit une zone 101 de refroidissement lent. Les deux dispositifs sont placés l'un au-dessus de l'autre, délimitant ainsi une zone de transition 105 de hauteur h. La hauteur h peut prendre toute valeur.

Selon une variante, représentée en pointillés sur la figure 2, le dispositif de refroidissement comporte en outre un tube 13 de refroidissement rapide qui définit une zone 102 de refroidissement rapide. La présence du tube 13 peut ne pas s'avérer nécessaire par exemple pour des raisons d'espace suffisant pour refroidir la fibre 7 à l'air ambiant entre la sortie du dispositif 11 de refroidissement lent et l'entrée du dispositif 5 de revêtement. A l'inverse, la présence d'un dispositif de refroidissement rapide tel le tube 13 peut s'avérer nécessaire pour que la fibre 7 atteigne la température d'entrée dans le dispositif 5 de revêtement dans l'espace disponible. A cette cote, le dispositif 13 ne peut pratiquement plus agir sur les propriétés mécaniques et/ou optiques de la fibre 8 revêtue issue de la fibre 7, les différents constituants de la fibre 7 étant suffisamment figés en sortie du dispositif 11 de refroidissement lent.

L'exemple qui suit illustre un mode particulier de réalisation de l'invention, sans pour autant en limiter la portée.

**Exemple**

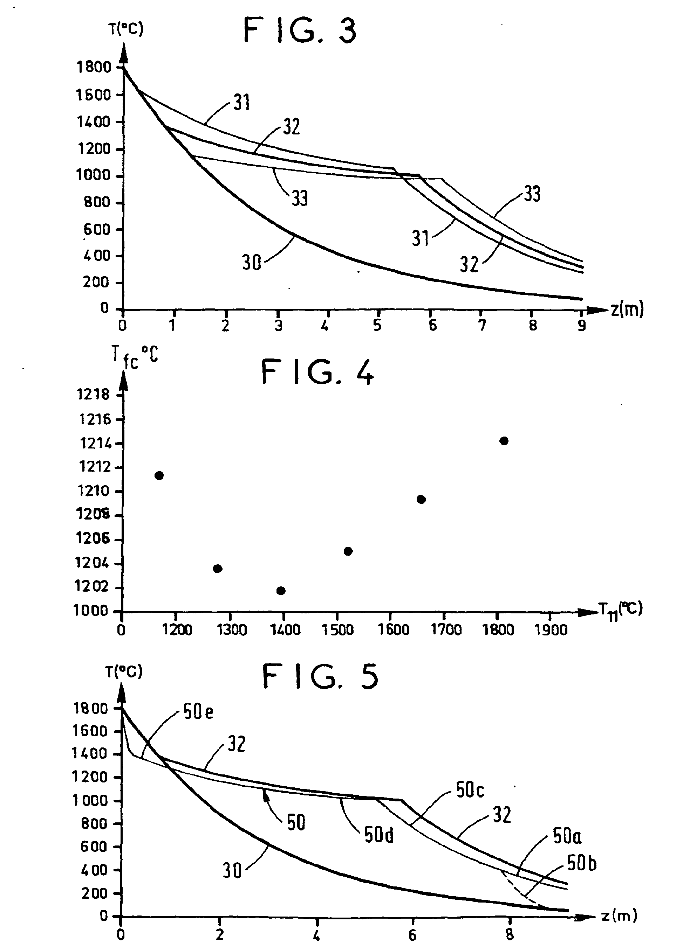

La figure 3 représente quelques courbes de refroidissement pour la fibre optique au sein d'un dispositif de fibrage selon l'art antérieur, qui par rapport au dispositif représenté sur la figure 2 ne comporte pas les dispositifs 10 et 13. La température en sortie de four 3 de fibrage est de 1800°C, la hauteur totale entre le four 3 de fibrage et le dispositif 5 de revêtement est de 9 m, et la vitesse de fibrage est de 900m/mn. Ainsi est représenté le cas selon l'art antérieur où seul un dispositif 1 de refroidissement lent est présent en sortie de four 3 de fibrage. On dispose d'un dispositif 11 de réchauffe de longueur 5 m avec une efficacité donnée. En abscisse est donnée la cote z, en mètres, depuis le bas du four de fibrage 3 (voir figure 2), et en ordonnée est donnée la température, T, de la fibre en °C. L'équation des parties continues des courbes de refroidissement est du type :

$$ T\ (°C) - T_0 = (T_e - T_0) \cdot \exp. \ (-\alpha^* z), $$

avec z la cote en mètres et où $\alpha$, $T_e$ et $T_0$ sont des paramètres de la relaxation du verre. Plusieurs courbes sont données, respectivement 31, 32 et 33, pour des températures d'entrée dans le dispositif 11 de réchauffe, $T_{11}$, respectivement égales à 1660°C, 1400°C et 1170°C. Une courbe comparative 30 de refroidissement simple à l'air, sans aucun dispositif 10, 11 ou 13 de refroidissement entre le four 3 de fibrage et le dispositif 5 de revêtement, est donnée.

En liaison avec la figure 3, la figure 4 représente la température fictive du coeur de la fibre 7, $T_{fc}$, en ordonnée et en °C, en fonction de la température d'entrée $T_{11}$, en °C, dans le dispositif 11 de refroidissement lent, au sein du même dispositif de fibrage que celui de la figure 3. On voit alors qu'il existe une valeur optimale de ladite température d'entrée, $T_{11}$, égale à environ 1400°C, pour laquelle la température fictive du coeur de la fibre 7, $T_{fc}$, est minimale, égale à environ 1202°C. La position finale du dispositif 11 sur la tour 1' de fibrage est donc déterminée par cette température d'entrée minimale. Pour cette valeur, la température fictive de la gaine, $T_{fg}$, est d'environ 1423 °C.

On dispose ensuite d'un dispositif 10 de refroidissement rapide, de longueur 20 cm et d'efficacité donnée, que l'on place sur la tour 1' de fibrage, entre le four 3 de fibrage et le dispositif 11, de façon à réaliser un dispositif de fibrage selon la figure 2, sans le dispositif 13. On ajuste ledit dispositif 10 de façon à ce que l'on obtienne un maximum en terme de température fictive de la gaine, $T_{fg}$, à 1440°C en maintenant la température d'entrée dans le dispositif de refroidissement lent à $T_{11}$. On calcule alors la température fictive du coeur, $T_{fc}$, qui est toujours égale à environ 1202°C.

A titre indicatif, un refroidissement simple à l'air, représenté sur la courbe 30 de la figure 3, donne une température fictive du coeur, $T_{fc}$, égale à environ 1259°C et une température de la gaine, $T_{fg}$, égale à environ 1480°C.

La figure 5 représente la courbe 50 de refroidissement finalement imposée à la fibre selon le procédé de l'invention. Les courbes 30 et 32 (cf. figure 3) ont été représentées à titre indicatif. On distingue le refroidissement rapide 10, courbe 50e, suivi du refroidissement lent 11, courbe 50d, puis un refroidissement à l'air ambiant, 50c, qui se poursuit jusqu'au dispositif 5 de revêtement, courbe 50a, ou bien qui se prolonge en un refroidissement rapide 13, courbe 50b, jusqu'audit dispositif 5.

La fibre optique revêtue 8 issue de la tour de fibrage 1' et ayant subi une étape de refroidissement comprenant un refroidissement 10 rapide suivi d'un refroidissement 11 lent selon l'invention présente donc des propriétés améliorées, principalement en termes de résistance mécanique qui est améliorée de 1 à 10%, par rapport à une fibre réalisée dans les conditions de l'art antérieur, tout en conservant un niveau d'atténuation inférieur de 0,005 dB/km à un refroidissement à l'air.

Bien entendu le procédé selon l'invention ne se limite pas aux représentations décrites ci-dessus. En particulier, il est possible de placer le dispositif 12 de refroidissement entre le bas du four 3 de fibrage et le haut du dispositif 5 de revêtement, à toute cote du bas du four 3 de fibrage, du moment que la température fictive du coeur, $T_{fc}$, soit minimisée et la température fictive de la gaine, $T_{fg}$, soit maximisée.

**Revendications**

**1.** / Procédé de refroidissement d'une fibre optique (7) en cours de fibrage, par mise en contact avec au moins un fluide refroidisseur dans au moins une zone de refroidissement (10, 11, 13),
**caractérisé en ce que** l'on procède dans une zone (100) de refroidissement rapide à un refroidissement (10) rapide, c'est-à-dire un refroidissement moins lent qu'un refroidissement à l'air ambiant, pour passer d'une température initiale de la fibre (7) comprise entre 2000°C et 1500°C pour des fibres à base de verre de silice, entre 450°C et 250°C pour des fibres à base de verre de fluorure et entre 250°C et 175°C dans le cas de fibre à base de matériau polymère, à une température de fin de refroidissement (10) rapide comprise entre 1700°C et 1200°C pour des fibres à base de verre de silice, entre 400°C et 200°C pour des fibres à base de verre de fluorure et entre 225°C et 75°C dans le cas de fibres à base de matériau polymère, suivi, dans une zone (101) de refroidissement lent, d'un refroidissement (11) lent, c'est-à-dire un refroidissement plus lent qu'un refroidissement à l'air ambiant, pour passer d'une température de début de refroidissement (11) lent de ladite fibre (7) comprise entre 1700°C et 1000°C pour des fibres à base de verre de silice, entre 400°C et 150°C pour des fibres à base de verre de fluorure et entre 225°C et 50°C dans le cas de fibres à base de matériau polymère, à une température de fin de refroidissement (11) lent de ladite fibre (7) comprise entre 1500°C et 700°C pour des fibres à base de verre de silice, entre 350°C et 25°C pour des fibres à base de verre de fluorure et entre 200°C et 25°C dans le cas de fibres à base de matériau polymère.

2. / Procédé selon la revendication 1 tel que le profil de température de chaque zone (10, 11) de refroidissement est établi de façon à ce que la température fictive de la gaine ($T_{fg}$) soit la plus élevée possible et la température fictive du coeur ($T_{fc}$) soit la plus faible possible.

3. / Procédé selon la revendication 2 tel que, le profil de refroidissement lent (11) étant choisi de façon à ce que la température fictive du coeur ($T_{fc}$) soit la plus faible possible, on ajuste alors le profil de refroidissement (10) rapide de façon que la température fictive de la gaine ($T_{fg}$) soit la plus élevée possible.

4. / Procédé selon la revendication 2 tel que, le profil de refroidissement rapide (10) étant choisi de façon à ce que la température fictive de la gaine ($T_{fg}$) soit la plus élevée possible, on ajuste alors le profil de refroidissement lent (11) de façon que la température fictive du coeur ($T_{fc}$) soit la plus faible possible.

5. / Procédé selon l'une des revendications 1 à 4 tel que l'on procède à un refroidissement (13) rapide supplémentaire dans une seconde zone (102) de refroidissement rapide, à la suite dudit refroidissement (11) lent.

**Claims**

1. Method of cooling an optical fibre (7) during drawing-out, by bringing it into contact with at least one cooling fluid in at least one cooling zone (10, 11, 13), **characterised in that** in a zone (100) of fast cooling there is carried out fast cooling (10), that is to say cooling that is less slow than cooling in ambient air, in order to bring an initial temperature of the fibre (7) of between 2000°C and 1500°C inclusive for fibres based on silica glass, between 450°C and 250°C inclusive for fibres based on fluoride glass and between 250°C and 175°C inclusive in the case of fibre based on polymer material, to a fast cooling (10) end temperature of between 1700°C and 1200°C inclusive for fibres based on silica glass, between 400°C and 200°C inclusive for fibres based on fluoride glass and between 225°C and 75°C inclusive in the case of fibres based on polymer material, which is followed, in a zone (101) of slow cooling, by slow cooling (11), that is to say cooling that is slower than cooling in ambient air, in order to bring a slow cooling (11) starting temperature of said fibre (7) of between 1700°C and 1000°C inclusive for fibres based on silica glass, between 400°C and 150°C inclusive for fibres based on fluoride glass and between 225°C and 50°C inclusive in the case of fibres based on polymer material to a slow cooling (11) end temperature of said fibre (7) of between 1500°C and 700°C inclusive for fibres based on silica glass, between 350°C and 25°C inclusive for fibres based on fluoride glass and between 200°C and 25°C inclusive in the case of fibres based on polymer material, and the initial temperature is higher than the fast cooling (10) end temperature, and the slow cooling (11) starting temperature is higher than the slow cooling (11) end temperature, and the fast cooling (10) end temperature is equal to or higher than the slow cooling (11) starting temperature.

2. Method according to claim 1, wherein the temperature profile of each cooling zone (10, 11) is established so that the fictive temperature of the cladding ($T_{fg}$) is as high as possible and the fictive temperature of the core ($T_{fc}$) is as low as possible.

3. Method according to claim 1, wherein, the slow cooling (11) profile having been chosen so that the fictive temperature of the core ($T_{fc}$) is as low as possible, the fast cooling (10) profile is then adjusted so that the fictive temperature of the cladding ($T_{fg}$) is as high as possible.

4. Method according to claim 1, wherein, the fast cooling (10) profile having been chosen so that the fictive temperature of the cladding ($T_{fg}$) is as high as possible, the slow cooling (11) profile is then adjusted so that the fictive temperature of the core ($T_{fc}$) is as low as possible.

5. Method according to one of claims 1 to 4, wherein, following said slow cooling (11), there is carried out, in a second zone (102) of fast cooling, additional fast cooling (13).

**Patentansprüche**

1. Verfahren zum Abkühlen einer optischen Faser (7) während eines Faserziehens durch in Kontakt bringen mit mindestens einem Abkühlfluid in mindestens einem Abschnitt des Abkühlens(10, 11, 13), **dadurch gekennzeichnet, dass** in einem Abschnitt (100) der schnellen Abkühlung eine schnelle Abkühlung (10) vorgenommen wird, das heißt eine weniger langsame Abkühlung als eine Abkühlung in Umgebungsluft, um von einer anfänglichen Temperatur der Faser (7) zwischen 2000°C und 1500°C für Fasern auf Basis von Quarzglas, zwischen 450°C und 250°C für Fasern auf Basis von Fluoridglas und zwischen 250°C und 175°C im Fall von Fasern auf Basis von Polymermaterial zu einer Endtemperatur der schnellen Abkühlung (10) zwischen 1700°C und 1200°C für Fasern auf Basis von Quarzglas, zwischen 400°C und 200°C für Fasern auf Basis von Fluoridglas und zwischen 225°C und75°C im Fall von Fasern auf Basis von Polymermaterial zu gelangen, gefolgt von, in einem Abschnitt (101) der langsamen Abkühlung, einer langsamen Abkühlung (11), das heißt einer langsameren Abkühlung als eine Abkühlung in Umgebungsluft, um von einer Anfangstemperatur der langsamen Abkühlung (11) der Faser (7) zwischen 1700°C und 1000°C für Fasern auf Basis von Quarzglas, zwischen 400°C und 150°C für Fasern auf Basis von Fluoridglas und zwischen 225°C und 50°C im Fall von Fasern auf Basis von Polymermaterial zu einer Endtemperatur der langsamen Abkühlung (11) der Faser (7) zwischen 1500°C und 700°C für Fasern auf Basis von Quarzglas, zwischen 350°C und 25°C für Fasern auf Basis von Fluoridglas und zwischen 200°C und 25°C im Fall von Fasern auf Basis von Polymermaterial zu gelangen, und die anfängliche Temperatur höher ist als die Endtemperatur der schnellen Abkühlung (10) und die Anfangstemperatur der langsamen Abkühlung (11) höher ist als die Endtemperatur der langsamen Abkühlung (11) und die Endtemperatur der schnellen Abkühlung (10) höher als die oder gleich der Anfangstemperatur der langsamen Abkühlung (11) ist.

2. Verfahren gemäß Anspruch 1 derart, dass das Profil der Temperatur jedes Abschnitts (10, 11) in einer Weise festgelegt wird, dass die fiktive Temperatur der Hülle ($T_{fg}$) so hoch wie möglich ist und die fiktive Temperatur des Kerns ($T_{fc}$) so gering wie möglich ist.

3. Verfahren gemäß Anspruch 1 derart, dass das Profil der schnellen Abkühlung (10) in einer Weise eingestellt wird, dass die fiktive Temperatur der Hülle ($T_{fg}$) so hoch wie möglich ist, wobei das Profil der langsamen Abkühlung (11) in einer Weise gewählt ist, dass die fiktive Temperatur des Kerns ($T_{fc}$) so gering wie möglich ist.

4. Verfahren gemäß Anspruch 1 derart, dass das Profil der langsamen Abkühlung (11) in einer Weise eingestellt wird, dass die fiktive Temperatur des Kerns ($T_{fc}$) so gering wie möglich ist, wobei das Profil der schnellen Abkühlung (10) in einer Weise gewählt ist, dass die fiktive Temperatur der Hülle ($T_{fg}$) so hoch wie möglich ist.

5. Verfahren nach einem der Ansprüche 1-4 derart, dass eine zusätzliche schnelle Abkühlung (13) in einem zweiten Abschnitt (102) der schnellen Abkühlung folgend der langsamen Abkühlung (11) vorgenommen wird.

FIG. 1

# FIG. 2

FIG. 3

FIG. 4

FIG. 5

EP 1 112 976 B1

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0079186 A1
- US 4761168 A
- DE 3713029 A1

**Littérature non-brevet citée dans la description**

- **G.W. SCHERER.** Relaxation in Glass and Composites. Krieger Publishing, 1992
- **C. T. MOYNIHAN.** Phenomenology of the Structural Relaxation Process and the Glass Transition. *Assignment of Glass Transition,* 1994, 32-49
- **O.S. NARAYANASWAMY.** *ournal of the American Ceramics Society,* 1971, vol. 54 (10), 491-498